# EUROPÄISCHE PATENTSCHRIFT

(11) **EP 3 305 418 B1**
(45) Veröffentlichungstag und Bekanntmachung des Hinweises auf die Patenterteilung: **02.11.2022**
(21) Anmeldenummer: 17189424.9
(22) Anmeldetag: 05.09.2017
(51) Int. Cl.: B05D 3/02, B05D 1/06, H05B 3/00, C09D 177/02, B29C 35/08

(54) **VORRICHTUNG ZUM ERWÄRMEN POLYMERER PULVER MITTELS STRAHLUNG BEI PULVERBESCHICHTUNGSVERFAHREN**
DEVICE FOR HEATING POLYMERIC POWDER BY RADIATION IN POWDER COATING PROCESS
DISPOSITIF DE CHAUFFAGE DE POUDRES POLYMÈRES PAR RADIATION DANS LE PROCÉDÉ DE REVÊTEMENT EN POUDRE

(30) Priorität: 04.10.2016 DE 102016219182; 03.03.2017 DE 102017203523
(43) Veröffentlichungstag der Anmeldung: 11.04.2018
(73) Patentinhaber: Evonik Operations GmbH, 45128 Essen (DE)
(72) Erfinder: Grebe, Maik, 44805 Bochum (DE); Diekmann, Wolfgang, 45731 Waltrop (DE); Baptista, Andreas, 40468 Düsseldorf (DE)
(74) Vertreter: Evonik Patent Association

(56) Entgegenhaltungen:
- EP-A1- 2 226 180
- EP-A1- 3 222 410
- DE-A1- 10 352 184
- JP-A- H07 296 946
- JP-A- H08 285 694
- US-B1- 6 531 086

## Beschreibung

Die vorliegende Erfindung betrifft eine Vorrichtung zum Erwärmen polymerer Pulver durch Strahlung bei Pulverbeschichtungsverfahren, ein Verfahren zum Erwärmen der Pulver sowie die Verwendung der Vorrichtung.

Die zur Pulverbeschichtung verwendeten Pulverpartikel bestehen im Allgemeinen aus trockenen, körnigen Partikeln, die einen Durchmesser zwischen 1 und 140 µm haben. Chemisch basieren diese meist auf Epoxid- oder Polyesterharzen. Daneben sind Hybridsysteme verbreitet, die sowohl Epoxid- als auch Polyesterharze als Bindemittel enthalten. Pulverpartikel auf Basis von thermoplastischen Polymeren werden ebenfalls häufig verwendet.

Stand der Technik ist, dass die Pulverpartikel elektrostatisch appliziert werden. Bei der elektrostatischen Pulverbeschichtung wird zunächst eine elektrisch geladene Pulverwolke erzeugt. Die gleichnamig geladenen Partikel werden zur Werkstückoberfläche transportiert. Dort schlagen sie sich nieder, haften dort elektrostatisch und bilden die Pulverlackschicht. Möglich ist eine Aufladung durch Corona-Aufladung/lonisation oder durch Reibung. Das Aufschmelzen und/oder Vernetzen der Pulverpartikel erfolgt üblicherweise durch das Aufheizen in einem Ofen durch Konvektion. Das Aufheizen durch Konvektion dauert mitunter eine längere Zeit, so dass die Aufladung der Partikel nachlässt und die Haftung abnimmt. In diesem Fall können die Partikel einfach abfallen, bevor es zu einem Aufschmelzen oder Vernetzen kommt. Die Qualität der Beschichtung nimmt in diesem Fall deutlich ab. Das Erwärmen der Pulverpartikel kann auch mittels elektromagnetischer Strahlung erfolgen. Dies hat den Vorteil, dass das Aufschmelzen/Vernetzen deutlich schneller erfolgen kann. Ein Problem ist jedoch, dass viele ungefärbte Polymere elektromagnetische Strahlung im sichtbaren und Nahinfrarot (IR-A) Wellenlängenbereich (0,78 - 1,4µm) nur sehr schlecht absorbieren bzw. die Absorption stark von der Einfärbung der Polymerpartikel abhängt. Im Fall der ungefärbten Polymerpartikel wird wegen der schlechten Absorption ein erheblicher Teil der Strahlungsenergie nicht genutzt. Bei eingefärbten Polymeren muss die Strahlungsmenge immer an der jeweiligen Einfärbung des Polymers angepasst werden. Ein weiterer Nachteil des aktuellen Stands der Technik ist der mögliche Kontakt von Pulverpartikel mit heißen Oberflächen und der damit verbundenen erhöhten Gefahr von Staubexplosionen.

In EP 3222410 A1 welches Teil des Stands der Technik gemäß Artikel 54(3) EPÜ ist, wird eine Vorrichtung zur schichtweisen Herstellung von dreidimensionalen Objekten beschrieben. Die Vorrichtung umfasst Wärmeabstrahlelemente, die dafür sorgen, dass eine schnelle Erwärmung der obersten Pulverschichten möglich ist, ohne die darunterliegenden Pulverschichten übermäßig zu erwärmen.

US 6531086 B1 beschreibt eine Vorrichtung für die Herstellung dreidimensionaler Objekte. Die Erstellung der Schichten erfolgt mittels eines Entwicklers, der auf einem Maskenapparat ein Muster erzeugt. Ein über dem Maskenapparat angeordneter Strahlungsgenerator lässt entsprechendes Material, das nicht durch die Maske abgedeckt ist, schmelzen oder sintern.

DE 10352184 A1 offenbart eine Vorrichtung zum Härten und/oder Trocknen einer Beschichtung auf einem Substrat. Über dem Substrat ist eine Strahlungsquelle angeordnet, deren elektromagnetische Strahlung der Beschichtung über ein Reflektorsystem zuführbar ist.

JPH08-285694 A beschreibt eine Infrarotbildaufnahmevorrichtung, mit der ein zu erfassendes Objekt ohne Verwendung eines Hintergrunds zum Ausstrahlen oder Reflektieren von Infrarotstrahlen erfasst werden kann.

EP 2226180 A1 befasst sich mit einer Vorrichtung zum Erwärmen von Kunststoffbehältnissen. Die Vorrichtung umfasst unter anderem eine Heizeinrichtung zum Erwärmen der Behältnisse. Die Heizeinrichtung weist eine Strahlungsquelle auf, welche Strahlung auf die Behältnisse richtet, sowie ein Reflektorelement, welches von der Strahlungsquelle ausgehende Strahlung reflektiert.

Das Dokument JP H07 296946 A offenbart einen Infrarotstrahler gemäß dem Oberbegriff des Anspruchs 1. Insbesondere weist die Vorrichtung eine Strahlungsquelle auf, welche im nahen Infrarotbereich ihre maximale Strahlungsleistung hat. Vor der Strahlungsquelle befindet sich eine Blende in Form einer beschichteten Platte aus Edelstahl, welche sowohl auf der Innenseite als auch auf der Außenseite mit Oxiden beschichtet ist. Die Strahlungsquelle sitzt in einem Gehäuse, welches Innen mit Spiegeln ausgestattet ist und in Richtung der Blende eine Öffnung aufweist. Die Vorrichtung hat ein Strahlungsmaximum bei einer Wellenlänge oberhalb von 5 µm.

Für das Erwärmen der polymeren Pulverpartikel ist daher eine Strahlungsquelle von Vorteil, die ein Großteil ihrer Strahlung im Wellenlängenbereich mehr als 2,5 µm und unter 4,8 µm abgibt. Strahlheizungen wie Keramikstrahler erfüllen diese Anforderung, sind aber sehr träge bzgl. der Temperaturregelung. Es wird daher für viele Anwendungen ein Strahler benötigt, der sein Strahlungsmaximum im Wellenlängenbereich von mehr als 2,5 µm und unter 4,8 µm hat und sich hinsichtlich der Strahlungsintensität schnell regeln lässt.

Demgemäß bestand die Aufgabe in der Bereitstellung einer Vorrichtung, die für das Erwärmen polymerer Pulverpartikel geeignet ist, jedoch die Nachteile des Standes der Technik nicht aufweist. Insbesondere sollte die Vorrichtung ein Strahlungsmaximum im Wellenlängenbereich von mehr als 2,5 µm und unter 4,8 µm aufweisen und eine zügige Änderung der Strahlungsintensität und damit eine schnelle Temperaturänderung ermöglichen.

Demgemäß wurde eine Vorrichtung der eingangs genannten Art gefunden, die eine Strahlungsquelle, ein Gehäuse und eine Blende umfasst. Das Gehäuse weist zumindest eine Öffnung in Richtung der Blende auf. Die Strahlungsquelle der Vorrichtung hat im Wellenlängenbereich von 0,78 - 2,5 µm ihre maximale Strahlungsleistung. Der Begriff "im Wellenlängenbereich" oder "im gesamten Wellenlängenbereich" ist für die Strahlungsquelle dahingehend zu verstehen, dass die Strahlungsquelle bei zumindest einer Wellenlänge des angegebenen Wellenlängenbereichs eine maximale Strahlungsleistung aufweist. Die Blende hat im Wellenlängenbereich von 0,78 - 2,5 µm einen Absorptionsgrad von mindestens 0,8. Der Begriff "im Wellenlängenbereich" oder "im gesamten Wellenlängenbereich" ist für die Blende dahingehend zu verstehen, dass die Blende bei allen Wellenlängen des angegebenen Wellenlängenbereichs mindestens den angegebenen Absorptionsgrad aufweist. Die Blende wird vorzugsweise senkrecht zur Strahlungsquelle in dem Gehäuse ausgerichtet. Bezüglich der zu erwärmenden Polymerpulverpartikel ist die Blende vorzugsweise parallel ausgerichtet.

Überraschend wurde gefunden, dass mit der erfindungsgemäßen Vorrichtung eine Vorrichtung als Strahlheizung bereit gestellt werden kann, die eine für das effiziente Erwärmen von polymeren Pulverpartikeln notwendige Strahlung erzeugen und zugleich hinsichtlich Intensität bzw. Temperatur schnell geregelt werden kann. Die Partikel werden nicht direkt durch die Strahlungsquelle, sondern von der Blende erwärmt. Die Blende nimmt die Strahlungsenergie der Strahlungsquelle auf und gibt die Energie in einem verschobenen Wellenlängenbereich ab. Das Strahlungsmaximum der erfindungsgemäßen Vorrichtung liegt demzufolge bei einer Wellenlänge von mehr als 2,5 µm und unter 4,8 µm, bevorzugt zwischen 3,1 µm und 4,2 µm.

Geeignete Strahlungsquellen sind IR-A Strahlungsquellen (Wellenlängen von 0,78 bis 1,4 µm) wie Halogenlampen oder NIR-Laser (NIR = nahes Infrarot).

Die Blende hat im gesamten Wellenlängenbereich von 0,78 - 2,5 µm einen Absorptionsgrad von mindestens 0,8, bevorzugt mindestens 0,9 und besonders bevorzugt mindestens 0,95. Die Dicke der Blende beträgt vorzugsweise maximal 1 mm. Bevorzugt beträgt die Dicke maximal 0,5 mm, besonders bevorzugt maximal 0,3 mm und ganz besonders bevorzugt maximal 0,1 mm.

Die Blende sollte vorzugsweise eine geringe Wärmekapazität aufweisen. Hierdurch reagiert die Blende relativ schnell auf Änderungen der Strahlungsintensität der Strahlungsquelle. Dadurch ist eine zügige Temperaturänderung der Vorrichtung möglich.

Beispiele für geeignete Materialien der Blende sind ausgewählt aus oxidierten Metallen wie Stahlblechen, Aluminium-, Kupfer- oder Silberblechen, Graphit, Silicium, oberflächenbehandelten und/oder gefärbten Keramiken, Mineralfasern und eingefärbten Gläsern, wobei eloxiertes und gefärbtes, insbesondere schwarz eingefärbtes, Aluminium bevorzugt ist. Kombinationen aus den genannten Materialien sind auch möglich.

Die Strahlungsquelle wird von einem Gehäuse umgeben, dessen der Strahlungsquelle zugewandten Oberflächen bevorzugt einen niedrigen Absorptionsgrad von weniger als 0,4 im Wellenlängenbereich von 0,78 - 2,5 µm haben, besonders bevorzugt weniger als 0,3. Das Gehäuse weist zumindest eine Öffnung in Richtung der Blende auf. Beispiele für geeignete Materialien des Gehäuses sind Metalle, bevorzugt mit polierter Oberfläche (Rz nach DIN EN ISO 4287 von max. 2µm), metallisierte Keramiken sowie Keramiken mit niedrigem Absorptionsgrad (kleiner 0,4 im Wellenlängenbereich von 0,78 - 2,5 µm). Der Begriff "im Wellenlängenbereich" oder "im gesamten Wellenlängenbereich" ist für das Gehäuse dahingehend zu verstehen, dass das Gehäuse bei allen Wellenlängen des angegebenen Wellenlängenbereichs einen geringeren als den angegebenen Absorptionsgrad aufweist

In einer bevorzugten Ausführungsform umfasst die erfindungsgemäße Vorrichtung zusätzlich eine Schutzscheibe. Hierbei ist die Blende zwischen der Strahlungsquelle und der Schutzscheibe angeordnet. Die Schutzscheibe verhindert einen direkten Kontakt von der erhitzten Blende mit den polymeren Pulverpartikeln. Die Schutzscheibe kann transparent sein. Die Transmission der Schutzscheibe beträgt im Wellenlängenbereich von 2,5 - 4,8 µm vorzugsweise mindestens 0,9. Die Schutzscheibe kann beispielsweise ausgewählt werden aus Chalkogenidglas oder Saphirglas. Der Begriff "im Wellenlängenbereich" oder "im gesamten Wellenlängenbereich" ist für die Schutzscheibe dahingehend zu verstehen, dass die Schutzscheibe bei allen Wellenlängen des angegebenen Wellenlängenbereichs mindestens den angegebenen Transmissionsgrad aufweist

Mit der Kombination von mehreren erfindungsgemäßen Vorrichtungen ist es möglich, auch größere Flächen zu erwärmen. Werden diese Vorrichtungen unterschiedlich geregelt, ist es möglich, die Temperaturverteilung auf der zu erwärmenden Fläche den technischen Erfordernissen anzupassen. In einer weiteren alternativen Ausführung werden mehrere Strahlquellen mit einer Blende kombiniert, um größere Flächen zu erwärmen.

Gehäuse und Blende sind vorzugsweise thermisch entkoppelt. Sofern eine Schutzscheibe umfasst ist, ist es bevorzugt, dass Gehäuse, Blende und Schutzscheibe voneinander thermisch entkoppelt sind.

Der Absorptionssgrad und die Transmission werden mittels eines Cary 5000 UV-Vis-NIR Spectrophotometer der Firma Varian nach DIN EN ISO 13468-2:2006-07 ermittelt. Die Messung findet unter Normbedingungen (23°C/50%) statt.

Beispiele geeigneter Polymere, die mittels der erfindungsgemäßen Vorrichtung verarbeitet werden können, sind Polyamide wie Polyamid 6, Polyamid 11 oder Polyamid 12, Co-Polyamide wie Polyamid 46, Polyamid 66, Polyamid 613, Polyamid 106, Polyamid 1010, Polyamid 1012, Polyamid 1212, Polyamid 1013, Polyamid 12/1012, Polyolefine wie Polyethylen und Polypropylen, Polyester und Polyaryletherketone (PEAK) wie Polyetheretherketon.

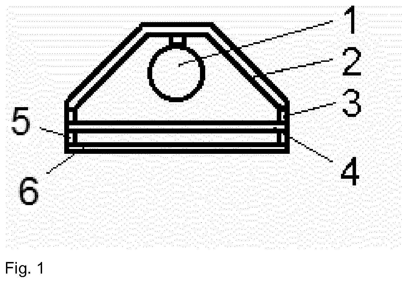

In Fig. 1 ist die erfindungsgemäße Vorrichtung exemplarisch dargestellt. Die Vorrichtung umfasst eine Strahlungsquelle (1), deren maximale Strahlungsleistung im Wellenlängenbereich von 0,78 - 2,5 µm liegt. Die Strahlungsquelle wird von einem Gehäuse (2) umgeben, dessen Innenoberfläche (Oberfläche, die der Strahlungsquelle zugewandt ist) einen niedrigen Absorptionsgrad hat. An einer Seite des Gehäuses (2) ist eine Öffnung, in der eine Blende (4) sitzt, die einen hohen Absorptionsgrad besitzt. Bevorzugt sind Blende (4) und Gehäuse (2) durch einen Isolator (3) thermisch entkoppelt. Bevorzugt weist die erfindungsgemäße Vorrichtung eine transparente Schutzscheibe (6) auf, um einen direkten Kontakt von Blende mit Pulverpartikeln zu vermeiden. Scheibe (6) und Blende (4) sind bevorzugt durch einen Isolator (5) thermisch entkoppelt.

Das Erwärmen der Pulverpartikel kann bis zum Aufschmelzen durchgeführt werden.

Ebenfalls Gegenstand der vorliegenden Erfindung ist ein Verfahren zum Erwärmen von polymeren Pulverpartikeln, wobei die erfindungsgemäße Vorrichtung eingesetzt wird. Hierbei werden Polymerpulver der Strahlung der Vorrichtung ausgesetzt. Die Pulverpartikel werden vorzugsweise mit einer Aufheizrate von mindestens 2 K/s erwärmt, bevorzugt mindestens 10 K/s, und besonders bevorzugt mindestens 20 K/s erwärmt. Die Temperaturänderung wird mit einem Pyrometer (optris CTfastLT) der Firma Optris gemessen.

Ein weiterer Gegenstand ist die Verwendung der erfindungsgemäßen Vorrichtung zum Erwärmen von Polymerpulverpartikeln, vorzugsweise in Pulverbeschichtungsverfahren.

### Beispiel

Die in den Beispielen beschriebenen Vorrichtungen werden genutzt, um Pulver zu erwärmen. Für die Versuche wird ein ungefärbtes Polyamid 12-Pulver mit den in der Tabelle 1 aufgeführten Kennzahlen genutzt. Die Versuche werden bei Normklima (23 °C / 50 %) durchgeführt. Die Strahlungsquellen haben eine Leistungsaufnahme von 500 W. In allen Beispielen wird auf eine Platte aus poliertem Stahl eine 0,5 mm dicke ebene Pulverschicht aufgetragen. Die Strahlheizungen werden in einem Abstand von 20 mm über der Pulveroberfläche positioniert. Das Pulver, die Metallplatte und die Strahlheizungen werden 2 h in dem Normklima konditioniert, bevor die Messung gestartet wird. Die Strahlheizungen in den Beispielen werden eingeschaltet und die Zeit gemessen, die benötigt wird, bis das Pulver anfängt zu schmelzen.

### Beispiel 1: Halogenstrahler ohne Blende (nicht erfindungsgemäß)

Ein Halogenstrahler, umfassend eine Halogenlampe als Strahlungsquelle, ein Gehäuse und eine Schutzscheibe, hat seine maximale Strahlungsleistung im Wellenlängenbereich von 0,78 - 2,5 µm.

### Beispiel 2: Keramikstrahler (nicht erfindunqsqemäß)

Ein Keramikstrahler hat seine maximale Strahlungsleistung im IR-C Wellenlängenbereich (3 - 1000 µm).

### Beispiel 3: Halogenstrahler mit Blende (erfindungsgemäß)

Der Halogenstrahler aus Beispiel 1 verfügt über eine Blende aus oxidiertem Stahlblech mit einer Dicke von 0,5mm und mit einem Absorptionsgrad von über 0,88 im Wellenlängenbereich von 0,78 - 2,5 µm.

### Beispiel 4: Halogenstrahler mit Blende (erfindungsgemäß)

Der Halogenstrahler aus Beispiel 1 verfügt über eine Blende aus eloxiertem und schwarz eingefärbtem Aluminiumblech mit einer Dicke von 0,3 mm und einem Absorptionsgrad von über 0,95 im Wellenlängenbereich von 0,78 - 2,5 µm.

**Tabelle 1: Pulverkennwerte des eingesetzten Polyamid 12**

| | **Wert** | **Einheit** | **Prüfart/Prüfgerät/Prüfparameter** |
|---|---|---|---|
| Schüttdichte | 0,450 | g/cm³ | DIN EN ISO 60 |
| Korngröße d50 | 57 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 36 | µm | Malvern Mastersizer 2000, Parameter siehe Korngröße d50 |
| Korngröße d90 | 82 | µm | Malvern Mastersizer 2000, Parameter siehe Korngröße d50 |
| <10,48µm | 1,4 | % | Malvern Mastersizer 2000, Parameter siehe Korngröße d50 |
| Fließfähigkeit | 28 | s | DIN EN ISO 6186, Verfahren A, Durchmesser Düsenauslauf 15mm |
| Lösungsviskosität | 1,58 | - | ISO 307, Schott AVS Pro, Lösemittel *m*-Kresol sauer, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 6,7 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 187 | °C | DIN 53765 DSC 7 v. Perkin Elmer Heiz-/Kühlrate 20K/min |
| Rekristallisationstemperatur | 142 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 2: Versuchsergebnisse**

| | Beispiel 1 | Beispiel 2 | Beispiel 3 | Beispiel 4 |
|---|---|---|---|---|
| Benötigte Zeit, bis Pulver anfängt zu schmelzen in s | 491 | 151 | 84 | 73 |

Die erfindungsgemäßen Vorrichtungen aus den Beispielen 3 und 4 benötigen eine deutlich geringere Zeit, um das Pulver zu schmelzen. In Anwendungen wie zum Beispiel dem elektrostatischen Beschichten, dem Minicoating oder in den in der ISO/ASTM 52900 genannten Pulver basierenden Verfahren kann eine deutliche Beschleunigung des Prozesses und somit der Produktivität erzielt werden. Zudem wird auch eine geringere Energiemenge benötigt, um das Pulver aufzuschmelzen. Die erfindungsgemäße Vorrichtung ermöglicht so dickere Pulverschichten oder mehrere Schichten zu erwärmen bzw. aufzuschmelzen.

## Patentansprüche

1. Vorrichtung zum Erwärmen von Polymerpulverpartikeln umfassend eine Strahlungsquelle (1), ein Gehäuse (2) und eine Blende (4), wobei die Strahlungsquelle (1) im Wellenlängenbereich von 0,78 - 2,5 µm ihre maximale Strahlungsleistung und die Blende (4) im Wellenlängenbereich von 0,78 - 2,5 µm einen Absorptionsgrad von mindestens 0,8 hat, wobei die Blende bei allen Wellenlängen des angegebenen Wellenlängenbereichs mindestens den angegebenen Absorptionsgrad aufweist, wobei das Gehäuse (2) zumindest eine Öffnung in Richtung der Blende (4) aufweist **dadurch gekennzeichnet, dass** das Strahlungsmaximum der Vorrichtung bei einer Wellenlänge von mehr als 2,5 µm und unter 4,8 µm liegt.

2. Vorrichtung gemäß Anspruch 1, **dadurch gekennzeichnet, dass** die der Strahlungsquelle zugewandten Oberflächen des Gehäuses (2) im Wellenlängenbereich von 0,78 - 2,5 µm einen Absorptionsgrad von weniger als 0,4 hat.

3. Vorrichtung gemäß einem der vorherigen Ansprüche, **dadurch gekennzeichnet, dass** die Blende (4) zwischen der Strahlungsquelle (1) und einer Schutzscheibe (6) angeordnet ist.

4. Vorrichtung gemäß Anspruch 3, **dadurch gekennzeichnet**, das die Schutzscheibe (6) im Wellenlängenbereich von 2,5 µm - 4,8 µm eine Transmission von mindestens 0,9 hat, wobei die Schutzscheibe (6) bei allen Wellenlängen des angegebenen Wellenlängenbereichs mindestens den angegebenen Transmissionsgrad aufweist.

5. Vorrichtung gemäß einem der Ansprüche 3 oder 4, **dadurch gekennzeichnet, dass** Gehäuse (2), Blende (4) und Schutzscheibe (6) thermisch entkoppelt sind.

6. Vorrichtung gemäß einem der vorherigen Ansprüche, **dadurch gekennzeichnet, dass** die Blende (4) aus eloxiertem und gefärbtem Aluminium besteht.

7. Vorrichtung gemäß einem der vorherigen Ansprüche, **dadurch gekennzeichnet, dass** die Blende (4) eine Dicke von maximal 1 mm hat.

8. Verfahren zum Erwärmen von Polymerpulverpartikeln mittels einer Vorrichtung gemäß einer der Ansprüche 1 bis 7, **dadurch gekennzeichnet, dass** die Polymerpulverpartikel der Strahlung der Vorrichtung ausgesetzt wird.

9. Verfahren gemäß Anspruch 8, **dadurch gekennzeichnet, dass** die Polymerpulverpartikel einer Aufheizrate von mindestens 2 K/s erwärmt werden.

10. Verwendung einer Vorrichtung der Ansprüche 1 bis 7 zum Erwärmen von Polymerpulverpartikeln.

11. Verwendung nach Anspruch 10 in Pulverbeschichtungsverfahren.

## Claims

1. Apparatus for heating polymer powder particles, comprising a radiation source (1), a housing (2) and a screen (4), wherein the radiation source (1) has its maximum radiation power within the wavelength range of 0.78-2.5 µm and the screen (4) has an absorbance of at least 0.8 within the wavelength range of 0.78-2.5 µm, wherein the screen has at least the absorbance specified at all wavelengths in the wavelength range specified, wherein the housing (2) has at least one opening in the direction of the screen (4), **characterized in that** the radiation maximum of the apparatus is at a wavelength of more than 2.5 µm and below 4.8 µm.

2. Apparatus according to Claim 1, **characterized in that** the surfaces of the housing (2) facing the radiation source has an absorbance of less than 0.4 within the wavelength range of 0.78-2.5 µm.

3. Apparatus according to either of the preceding claims, **characterized in that** the screen (4) is arranged between the radiation source (1) and a guard plate (6).

4. Apparatus according to Claim 3, **characterized in that** the guard plate (6) has a transmittance of at least 0.9 within the wavelength range of 2.5 µm-4.8 µm, wherein the guard plate (6) has at least the transmittance specified at all wavelengths in the wavelength range specified.

5. Apparatus according to either of Claims 3 and 4, **characterized in that** housing (2), screen (4) and guard plate (6) are thermally decoupled.

6. Apparatus according to any of the preceding claims, **characterized in that** the screen (4) consists of eloxed and coloured aluminium.

7. Apparatus according to any of the preceding claims, **characterized in that** the screen (4) has a thickness of not more than 1 mm.

8. Method of heating polymer powder particles by means of an apparatus according to any of Claims 1 to 7, **characterized in that** the polymer powder particles are exposed to the radiation from the apparatus.

9. Method according to Claim 8, **characterized in that** the polymer powder particles are heated at a heating rate of at least 2 K/s.

10. Use of an apparatus of Claims 1 to 7 for heating polymer powder particles.

11. Use according to Claim 10 in powder coating methods.

## Revendications

1. Dispositif de chauffage de particules de poudre de polymère, ledit dispositif comprenant une source de rayonnement (1), un boîtier (2) et un écran (4), la source de rayonnement (1) ayant sa puissance de rayonnement maximale dans la gamme de longueurs d'onde allant de 0,78 à 2,5 µm et l'écran (4) ayant une capacité d'absorption d'au moins 0,8 dans la gamme de longueurs d'onde allant de 0,78 à 2,5 µm, l'écran ayant au moins la capacité d'absorption spécifiée pour toutes les longueurs d'onde de la gamme de longueurs d'onde spécifiée, le boîtier (2) comportant au moins une ouverture en direction de l'écran (4), **caractérisé en ce que** le maximum de rayonnement du dispositif est à une longueur d'onde supérieure à 2,5 µm et inférieure à 4,8 µm.

2. Dispositif selon la revendication 1, **caractérisé en ce que** les surfaces du boîtier (2) qui sont dirigées vers la source de rayonnement ont une capacité d'absorption inférieure à 0,4 dans la gamme de longueurs d'onde allant de 0,78 à 2,5 µm.

3. Dispositif selon l'une des revendications précédentes, **caractérisé en ce que** l'écran (4) est disposé entre la source de rayonnement (1) et une vitre de protection (6).

4. Dispositif selon la revendication 3, **caractérisé en ce que** la vitre de protection (6) a une transmission d'au moins 0,9 dans la gamme de longueurs d'onde allant de 2,5 µm à 4,8 µm, la vitre de protection (6) ayant au moins la capacité de transmission spécifiée pour toutes les longueurs d'onde de la gamme de longueurs d'onde spécifiée.

5. Dispositif selon l'une des revendications 3 et 4, **caractérisé en ce que** le boîtier (2), l'écran (4) et la vitre de protection (6) sont découplés thermiquement.

6. Dispositif selon l'une des revendications précédentes, **caractérisé en ce que** l'écran (4) est en aluminium anodisé et coloré.

7. Dispositif selon l'une des revendications précédentes, **caractérisé en ce que** l'écran (4) a une épaisseur maximale de 1 mm.

8. Procédé de chauffage de particules de poudre de polymère au moyen d'un dispositif selon l'une des revendications 1 à 7, **caractérisé en ce que** les particules de poudre de polymère sont exposées au rayonnement du dispositif.

9. Procédé selon la revendication 8, **caractérisé en ce que** les particules de poudre de polymère sont chauffées à une vitesse de chauffe d'au moins 2 K/s.

10. Utilisation d'un dispositif selon les revendications 1 à 7 pour chauffer des particules de poudre de polymère.

11. Utilisation selon la revendication 10 dans des procédés de revêtement à poudre.
